# EUROPÄISCHE PATENTANMELDUNG

(11) **EP 1 855 437 A1**
(43) Veröffentlichungstag der Anmeldung: **14.11.2007**
(21) Anmeldenummer: 06122756.7
(22) Anmeldetag: 23.10.2006
(51) Int. Cl.: H04L 29/06, H04L 29/08

(54) **Verfahren zum Aufbau einer Push-to-talk-Kommunikationsverbindung**

(30) Priorität: 08.05.2006 DE 102006021375
(71) Anmelder: SIEMENS AKTIENGESELLSCHAFT, 80333 München (DE)
(72) Erfinder: Dostal, Pavel, 79828 Morice (CZ); Sedlacek, Ivo, 66434 Kurim (CZ)
(74) Vertreter: Berg, Peter

(57) **Zusammenfassung**

Verfahren zum Aufbau einer Push-to-talk-(Ptt) Kommunikationsverbindung zwischen zwei Ptt-Geräten (1,2), bei der Daten unterschiedlichen Datentyps, wie etwa Sprachdaten (Sp), Audiodaten (A), Videodaten (V) usw., zwischen den Ptt-Geräten (1,2) übertragen werden, wobei das erste Ptt-Gerät (1) eine Ptt-Verbindungsanfrage übermittelt, und in weiterer Folge eine Kommunikationsverbindung für zumindest eine Auswahl dieser unterschiedlichen Datentypen über einen Kommunikationskanal (F1,NF) gemäß eines Kommunikationsprotokolls aufgebaut wird. Erfindungsgemäß ist vorgesehen, dass in der Ptt-Verbindungsanfrage eine Prioritätsinformation enthalten ist, mit der den Datentypen eine Übertragungspriorität zugewiesen wird, und dass das Kommunikationsprotokoll den Aufbau eines Kommunikationskanals (F1,NF) nur dann zulässt, wenn das zweite Ptt-Gerät (2) für den Datentyp oder die Datentypen mit der höchsten Übertragungspriorität verfügbar ist, und die Übermittlung eines Datentyps mit niedrigerer Übertragungspriorität über diesen Kommunikationskanal (F1,NF) nur dann zulässt, wenn das zweite Ptt-Gerät (2) für diesen Datentyp verfügbar ist und das zweite Ptt-Gerät (2) auch für alle Datentypen mit höherer Übertragungspriorität verfügbar ist.

## Beschreibung

Die Erfindung bezieht sich auf ein Verfahren zum Aufbau einer Push-to-talk-(Ptt)-Kommunikationsverbindung zwischen einem ersten Ptt-Gerät und einem zweiten Ptt-Gerät, bei der Daten unterschiedlichen Datentyps, wie etwa Sprachdaten, Bilddaten oder Textdaten, zwischen dem ersten und dem zweiten Ptt-Gerät übertragen werden, wobei das erste Ptt-Gerät eine Ptt-Verbindungsanfrage für die gegenseitige Übertragung unterschiedlicher Datentypen an das zweite Ptt-Gerät übermittelt, und in weiterer Folge eine Kommunikationsverbindung für zumindest eine Auswahl dieser unterschiedlichen Datentypen über einen Kommunikationskanal gemäß eines Kommunikationsprotokolls aufgebaut wird, gemäß dem Oberbegriff von Anspruch 1.

Die Erfindung betrifft weiters ein Push-to-talk-(Ptt)-Gerät zum Aufbau einer Push-to-talk-(Ptt)-Kommunikationsverbindung zu einem weiteren Ptt-Gerät, bei der Daten unterschiedlichen Datentyps, wie etwa Sprachdaten, Bilddaten oder Textdaten, zwischen dem ersten und dem zweiten Ptt-Gerät über einen Kommunikationskanal gemäß eines Kommunikationsprotokolls übertragen werden, gemäß dem Oberbegriff von Anspruch 9.

Die Erfindung betrifft weiters eine Kommunikationsanordnung zum Aufbau einer Push-to-talk-(Ptt)-Kommunikationsverbindung mit einem ersten Ptt-Gerät und einem zweiten Ptt-Gerät, zwischen denen Daten unterschiedlichen Datentyps, wie etwa Sprachdaten, Bilddaten oder Textdaten, über einen Kommunikationskanal gemäß eines Kommunikationsprotokolls übertragen werden, sowie einem Ptt-Server, gemäß dem Oberbegriff von Anspruch 10.

Push-to-talk-(Ptt)-Kommunikationsverbindungen finden insbesondere im Zusammenhang mit der Mobilfunktechnologie Anwendung, wobei man in diesem Fall auch von Push-to-talk-over-Cellular(PoC)-Verbindungen spricht, da es sich bei den entsprechenden Ptt-Geräten um Mobilfunkgeräte handelt. Hierbei wird es einem Mobilfunkteilnehmer mithilfe seines Ptt-Geräts ermöglicht, eine Sprachnachricht an einen oder mehrere Empfänger gleichzeitig über eine Mobilfunk-Schnittstelle zu übermitteln, meistens durch Betätigen einer Taste. Dabei werden die Sprachdaten üblicherweise schon während des Sprechvorgangs des Senders über das Mobilfunk-Kommunikationsnetzwerk verteilt, und an den oder die gewünschten Empfänger übermittelt. Eine PoC-Kommunikationsverbindung ähnelt daher dem bekannten CB-Funk, allerdings mit dem großen Unterschied, dass die Teilnehmer einer PoC-Verbindung weltweit erreichbar sind, da die Übertragung der Daten über ein Mobilfunk-Netzwerk erfolgt. Im folgenden ist in erster Linie von PoC-Verbindungen die Rede, die Erfindung ist aber prinzipiell nicht auf eine Anwendung im Mobilfunkbereich eingeschränkt.

Technisch funktioniert eine PoC-Kommunikation ähnlich wie bei der Internet-Telefonie ("Voice over IP", VoIP). Die Teilnehmer bekommen zuerst eine Signalisierung durch das SIP-Protokoll (Session Initiation Protocol), nachfolgend werden die Sprachdaten ("Talk Bursts") über das RTP-Protokoll (Real-Time Transport Protocol) übertragen. Dabei ist man um größtmögliche Standardisierung bemüht, um die Kompatibilität der teilnehmenden PoC-Geräte sicher zu stellen. Derzeit existieren etwa der "PoC Version 1.0"-Standard sowie eine Version 2.0, die grundlegende Eigenschaften der Kommunikationsprotokolle für Aufbau und Betrieb der PoC-Kommunikationsverbindung festlegen sollen.

Gemäß gegenwärtig üblicher Industriespezifikationen sind zwei unterschiedliche Varianten zum Aufbau einer PoC-Kommunikationsverbindung (d.h. einer PoC-Session) beschrieben, die sich dadurch unterscheiden, zu welchem Zeitpunkt ein erster PoC-Benutzer nach erfolgtem Aufbau der PoC-Session mit einer PoC-Server-Einheit mit dem Sprechen beginnen kann, und die Sprachdaten zu den weiteren PoC-Teilnehmern übertragen werden.

Gemäß dem sogenannten "Late Media Modus" wird dem ersten PoC-Benutzer, d.h. einer ersten PoC-Client-Einheit, erst dann eine Freigabe zum Senden von Daten, etwa von Sprachdaten, erteilt, wenn zu einem angewählten PoC-Benutzer, bei dem es sich auch um eine PoC-Client-Einheit handelt, tatsächlich eine PoC-Kommunikationsverbindung aufgebaut wurde, und dieser PoC-Benutzer die Ptt-Verbindungsanfrage auch angenommen hat.

Gemäß der zweiten Variante, die auch als "Early Media Modus" bezeichnet wird, wird dem ersten PoC-Benutzer von der PoC-Server-Einheit bereits dann eine Freigabe zum Senden von Daten erteilt, obwohl noch keine Kommunikationsverbindung zwischen der PoC-Server-Einheit und dem angewählten PoC-Teilnehmer besteht. Der erste PoC-Teilnehmer kann somit nicht sicher sein, ob seine Daten vom zweiten PoC-Teilnehmer bereits empfangen wurden.

Zusätzliche Schwierigkeiten ergeben sich beim Aufbau einer PoC-Session, wenn Daten unterschiedlichen Datentyps übertragen werden sollen, also nicht nur Sprachdaten, sondern auch Audiodaten (z.B. Musikdateien), Videodaten, Bilder, Textnachrichten oder andere textuelle Daten, wie dies auch im PoC Version 2.0-Standard vorgesehen ist. Schwierigkeiten können dabei etwa entstehen, wenn nicht jeder der PoC-Clients jeden Datentyp technisch verwerten kann, oder wenn ein bestimmter PoC-Client einen bestimmten Datentyp nicht empfangen möchte (etwa Sprach- oder Audiodaten, falls der Teilnehmer sein PoC-Gerät in bestimmten Situationen geräuschlos betreiben möchte). In diesen Fällen können somit aus einer Gruppe verschiedener Datentypen, die in der Verbindungsanfrage eines PoC-Clients (dem sog. "PoC-Initiator") enthalten sind, von den anderen PoC-Clients lediglich Untergruppen von Datentypen akzeptiert werden. Gemäß dem Stand der Technik besitzt der PoC-Initiator somit keinerlei Möglichkeit festzustellen, ob und für welche Datentypen die anderen PoC-Clients empfangsbereit sind. Selbstverständlich könnte während einer PoC-Session erkannt werden, ob ein anderer Teilnehmer einen bestimmten Datentyp empfangen kann, zu diesem Zeitpunkt wurde die PoC-Session aber bereits erstellt, und verursacht bereits Kosten. Vorteilhaft wäre es stattdessen, wenn bereits vor Aufbau einer PoC-Session entschieden werden kann, ob eine Verbindung zu einem Teilnehmer aufgebaut werden soll.

Diese Schwierigkeit findet im PoC Version 2.0-Standard Erwähnung, ohne dass hierfür eine Lösung vorgeschlagen wurde. Eine solche Lösung sollte möglichst einfach sein und sicher stellen, dass ein PoC-Client nur dann zu einer PoC-Session zugelassen wird, wenn er für zumindest einen gemeinsamen Datentyp mit allen anderen an der PoC-Session teilnehmenden PoC-Clients empfangsbereit ist.

Dieses Ziel wird durch ein Verfahren gemäß Anspruch 1, ein Push-to-talk-Gerät gemäß Anspruch 9, und eine Kommunikationsanordnung zum Aufbau einer Push-to-talk-Kommunikationsverbindung gemäß Anspruch 10 erreicht.

Anspruch 1 bezieht sich zunächst auf ein Verfahren zum Aufbau einer Push-to-talk-(Ptt)-Kommunikationsverbindung zwischen einem ersten Ptt-Gerät und einem zweiten Ptt-Gerät, bei der Daten unterschiedlichen Datentyps, wie etwa Sprachdaten, Audiodaten, Videodaten, Bilddaten, Textdaten, oder andere, textuelle Daten, zwischen dem ersten und dem zweiten Ptt-Gerät übertragen werden, wobei das erste Ptt-Gerät eine Ptt-Verbindungsanfrage für die gegenseitige Übertragung unterschiedlicher Datentypen an das zweite Ptt-Gerät übermittelt, und in weiterer Folge eine Kommunikationsverbindung für zumindest eine Auswahl dieser unterschiedlichen Datentypen über einen Kommunikationskanal gemäß eines Kommunikationsprotokolls aufgebaut wird. Erfindungsgemäß ist vorgesehen, dass in der Ptt-Verbindungsanfrage eine Prioritätsinformation enthalten ist, mit der den über den Kommunikationskanal zu übertragenden, unterschiedlichen Datentypen eine Übertragungspriorität zugewiesen wird, und das Kommunikationsprotokoll den Aufbau eines Kommunikationskanals mit dem zweiten Ptt-Gerät nur dann zulässt, wenn das zweite Ptt-Gerät für den Datentyp oder die Datentypen mit der höchsten Übertragungspriorität verfügbar ist, und die Übermittlung eines Datentyps mit niedrigerer Übertragungspriorität über diesen Kommunikationskanal nur dann zulässt, wenn das zweite Ptt-Gerät für diesen Datentyp verfügbar ist, und das zweite Ptt-Gerät auch für alle Datentypen mit höherer Übertragungspriorität verfügbar ist.

Somit wird eine "Rangliste" der unterschiedlichen Datentypen erstellt, die entweder für jede PoC-Session dieselbe ist, oder durch den PoC-Initiator vor dem Aufbau der PoC-Session festgelegt werden kann. Ein PoC-Client, der zu einer PoC-Session geladen wird, kann erfindungsgemäß nur dann teilnehmen, wenn er den Datentyp mit der höchsten Übertragungspriorität unterstützt. Für einen Datentyp mit niedrigerer Priorität darf der eingeladenen PoC-Client wiederum nur dann teilnehmen, wenn er alle Datentypen mit höherer Übertragungspriorität unterstützt. Dieses Kommunikationsprotokoll erlaubt es dem PoC-Initiator daher, vor der PoC-Session festzulegen, dass jeder teilnehmende PoC-Client zumindest einen Datentyp unterstützt, und zwar jenen, dem der PoC-Initiator die höchste Priorität verliehen hat.

Die Übertragung der Datentypen erfolgt dabei über Kommunikationskanäle, worunter organisatorische Übertragungswege verstanden werden, in denen ein Kommunikationsprotokoll für die Übertragung einer Gruppe von Datentypen, die diesem Kommunikationsprotokoll unterliegen, implementiert ist. Solche Kommunikationskanäle werden auch als "Media Floor Control Entities" bezeichnet, wobei es sich bei den "Media" um die gegenständlichen Datentypen handelt, und bei einer "Media Floor Control" um ein Kommunikationsprotokoll. Dabei ist es üblich, dass die Übertragung kontinuierlicher (Echtzeit-)Datentypen wie etwa Sprach-, Audio- oder Videodaten über einen Kommunikationskanal erfolgt, bei diskreten (Nicht-Echtzeit)-Datentypen wie etwa Textnachrichten oder textuelle Dateien ist es aber nicht üblich, einen eigenen Kommunikationskanal zu wählen.

Wie noch näher ausgeführt werden wird, ist es aber im Rahmen der Erfindung vorteilhaft, auch für diskrete Datentypen einen Kommunikationskanal zu definieren. Daher sieht Anspruch 2 vor, dass für eine erste Untergruppe der zu übertragenden, unterschiedlichen Datentypen ein erster Kommunikationskanal verwendet wird, und für eine zweite Untergruppe der zu übertragenden, unterschiedlichen Datentypen ein zweiter Kommunikationskanal verwendet wird.

Durch diese Maßnahme wird es insbesondere möglich, die Merkmale von Anspruch 3 zu verwirklichen, dem zu Folge in der Ptt-Verbindungsanfrage eine Prioritätsinformation enthalten ist, mit der den Kommunikationskanälen eine Übertragungspriorität zugewiesen wird, und das Kommunikationsprotokoll den Aufbau des Kommunikationskanals mit der niedrigeren Übertragungspriorität nur dann zulässt, wenn ein Aufbau des Kommunikationskanals mit der höheren Übertragungspriorität erfolgt.

Gemäß Anspruch 4 ist in der Ptt-Verbindungsanfrage eine Prioritätsinformation enthalten, die den Datentypen eine Übertragungspriorität unabhängig von deren Zuteilung zu Kommunikationskanälen zuordnet, wobei mehrere Datentypen dieselbe Übertragungspriorität besitzen können, aber jeder Datentyp lediglich eine Prioritätszuordnung besitzt.

Anspruch 5 sieht vor, dass mehreren Datentypen dieselbe Übertragungspriorität zugeordnet ist, und zumindest von einem dieser Datentypen zumindest ein weiterer Datentyp in seiner Übertragungspriorität abhängt, wobei das Kommunikationsprotokoll den Aufbau eines Kommunikationskanals mit dem zweiten Ptt-Gerät für den zumindest einen weiteren, abhängigen Datentyp nur dann zulässt, wenn das zweite Ptt-Gerät für den Datentyp oder die Datentypen, von denen er abhängig ist, verfügbar ist.

Gemäß Anspruch 6 handelt es sich bei der Ptt-Kommunikationsverbindung um eine Mobilfunk-Kommunikationsverbindung, etwa zum Aufbau einer PoC-Session. Gemäß Anspruch 7 erfolgt die Ptt-Verbindungsanfrage mithilfe einer SIP-INVITE-Nachricht. Die Zuweisung der Übertragungspriorität kann etwa gemäß Anspruch 8 im Session Description Protocol erfolgen.

Anspruch 9 bezieht sich auf ein Push-to-talk-(Ptt)-Gerät zum Aufbau einer Push-to-talk-(Ptt)-Kommunikationsverbindung zu einem weiteren Ptt-Gerät, bei der Daten unterschiedlichen Datentyps, wie etwa Sprachdaten, Audiodaten, Videodaten, Bilddaten, Textdaten, oder andere, textuelle Daten, zwischen dem ersten und dem zweiten Ptt-Gerät über einen Kommunikationskanal gemäß eines Kommunikationsprotokolls übertragen werden. Erfindungsgemäß ist bei einem solchen Gerät vorgesehen, dass eine Einheit zum Erstellen einer Ptt-Verbindungsanfrage vorgesehen ist, die eine Prioritätsinformation enthält, mit der den über den Kommunikationskanal zu übertragenden, unterschiedlichen Datentypen eine Übertragungspriorität zugewiesen wird, und mit einer Sendeeinheit zum Senden der Ptt-Verbindungsanfrage an ein weiteres Ptt-Gerät ausgestattet ist.

Schließlich wird gemäß Anspruch 10 eine Kommunikationsanordnung zum Aufbau einer Push-to-talk-(Ptt)-Kommunikationsverbindung mit einem ersten Ptt-Gerät und einem zweiten Ptt-Gerät, zwischen denen Daten unterschiedlichen Datentyps, wie etwa Sprachdaten, Audiodaten, Videodaten, Bilddaten, Textdaten, oder andere, textuelle Daten, über einen Kommunikationskanal gemäß eines Kommunikationsprotokolls übertragen werden, sowie einem Ptt-Server, vorgeschlagen. Hierbei wird erfindungsgemäß vorgeschlagen, dass die Ptt-Geräte jeweils eine Einheit zum Erstellen einer Ptt-Verbindungsanfrage, sowie eine Sendeeinheit zum Senden der Ptt-Verbindungsanfrage an ein weiteres Ptt-Gerät umfassen, wobei die Ptt-Verbindungsanfrage des ersten Ptt-Geräts eine Prioritätsinformation enthält, mit der den über den Kommunikationskanal zu übertragenden, unterschiedlichen Datentypen eine Übertragungspriorität zugewiesen wird, und der Ptt-Server mit einem Kommunikationsprotokoll ausgestattet ist, das den Aufbau eines Kommunikationskanals zwischen dem ersten Ptt-Gerät und dem zweiten Ptt-Gerät nur dann zulässt, wenn das zweite Ptt-Gerät für den Datentyp oder die Datentypen mit der höchsten Übertragungspriorität verfügbar ist, und die Übermittlung eines Datentyps mit niedrigerer Übertragungspriorität über diesen Kommunikationskanal nur dann zulässt, wenn das zweite Ptt-Gerät für diesen Datentyp verfügbar ist, und das zweite Ptt-Gerät auch für alle Datentypen mit höherer Übertragungspriorität verfügbar ist.

Die Erfindung wird im Folgenden anhand der beiliegenden Figuren näher erläutert. Hierbei zeigen die
Fig. 1 eine schematische Darstellung einer Kommunikationsanordnung mit einem PoC-Initiator, einer PoC-Server-Einheit, sowie drei weiteren PoC-Teilnehmern, die vom PoC-Initiator kontaktiert werden,
Fig. 2 eine schematische Darstellung des herkömmlichen Aufbaus einer PoC-Session in einer Kommunikationsanordnung gemäß Fig. 1,
Fig. 3 eine schematische Darstellung des Aufbaus einer PoC-Session in einer Kommunikationsanordnung gemäß Fig. 1 für eine erste Ausführungsform der Erfindung,
Fig. 4 eine schematische Darstellung des Aufbaus einer PoC-Session in einer Kommunikationsanordnung gemäß Fig. 1 für eine zweite Ausführungsform der Erfindung, und die
Fig. 5 eine schematische Darstellung eines Beispiels eines Regelwerkes von Übertragungsprioritäten für Datentypen mit gegenseitigen Abhängigkeiten in vertikaler und horizontaler Hierarchie.

Die Erfindung bezieht sich allgemein auf Push-to-talk-(Ptt)Kommunikationsanordnungen mit Ptt-Clients bzw. Ptt-Geräten 1,2 und zumindest einer Ptt-Server-Einheit 3. Im folgenden soll die Erfindung in Bezug auf eine spezielle Anordnung dieser Art erläutert werden, nämlich eine Push-to-talk-over-Cellular(PoC)-Kommunikationsanordnung mit einem PoC-Initiator 1, einer PoC-Server-Einheit 3, sowie drei weiteren PoC-Clients 2a,2b,2c, die vom PoC-Initiator 1 kontaktiert werden. Die PoC-Clients 1,2a,2b,2c sind jeweils eingerichtet zur Kommunikation gemäß dem UMTS-Standard, dem GSM-Standard, dem GPRS-Standard, oder einem anderen Mobilfunk-Kommunikationsstandard.

Allgemein wird im Rahmen der Erfindung unter einer PoC-Kommunikation eine Kommunikation zwischen den PoC-Clients 1,2a,2b,2c über eine Mobilfunk-Schnittstelle verstanden, bei der der Sender, beispielsweise durch Auswahl einer speziellen Drucktaste des PoC-Geräts, Sprachdaten an mindestens einen Empfänger, vorzugsweise an mehrere Empfänger, gleichzeitig gemäß dem Duplex-Verfähren, vorzugsweise gemäß dem Halbduplex-Verfahren, übermitteln kann. Das setzt voraus, dass bereits eine PoC-Session aufgebaut wurde, wobei der Sender und der Empfänger ein jeder der PoC-Clients 1,2a,2b,2c sein kann. Gemäß dem Halbduplex-Verfahren kann nur der Benutzer der Sendeeinheit sprechen, die Benutzer der Empfängereinheiten können den Benutzer der Sendeeinheit nur hören und nicht unterbrechen.

Gemäß der PoC-Technologie werden die eingesprochenen Sprachdaten üblicherweise schon während des Einsprechens der Sprachdaten durch einen PoC-Client 1,2a,2b,2c über das IMS (IP Multimedia Subsystem)-Kern-Kommunikationsnetz zu den anderen PoC-Clients 1,2a,2b,2c verteilt. Diese Technologie wird auch als "Streaming" bezeichnet. Damit kann eine PoC-Kommunikationsverbindung mit dem bekannten CB-Funk verglichen werden, allerdings mit dem großen Unterschied, dass die Teilnehmer einer PoC-Verbindung weltweit erreichbar sind, da die Übertragung der Daten über ein Mobilfunk-Netzwerk erfolgt.

Für den Fall, dass der Sender immer wieder die gleichen Empfänger ansprechen möchte, ist im Rahmen des PoC-Dienstes für jeden PoC-Client 1,2a,2b,2c vorgesehen, sich seine persönlichen, fest vorgegebenen Gruppen von PoC-Clients 1,2a,2b,2c zu definieren. So kann beispielsweise eine Gruppe von PoC-Clients 2a,2b,2c und deren jeweilige Adressen definiert werden. Die Adressen können beispielsweise in Form einer Telefonnummer als Session Initiation Protocol-Unique Resource Locator (SIP-URL), oder in Form einer Session Initiation Protocol-Adresse (SIP-Adresse als SIP-URL) angegeben werden. Die benutzerdefinierte Gruppe von PoC-Clients 2a,2b,2c erhält dabei üblicherweise eine eigene Gruppen-Adresse, beispielsweise ebenfalls in Form einer SIP-URL, sodass der PoC-Initiator 1 beim Aufbau einer PoC-Session alle Gruppenmitglieder mittels der PoC-Server-Einheit 3 adressieren und zur PoC-Session einladen kann. Hierbei wird die PoC-Verbindungsanfrage an alle in der jeweiligen Gruppe enthaltenen PoC-Clients 2a,2b,2c übermittelt.

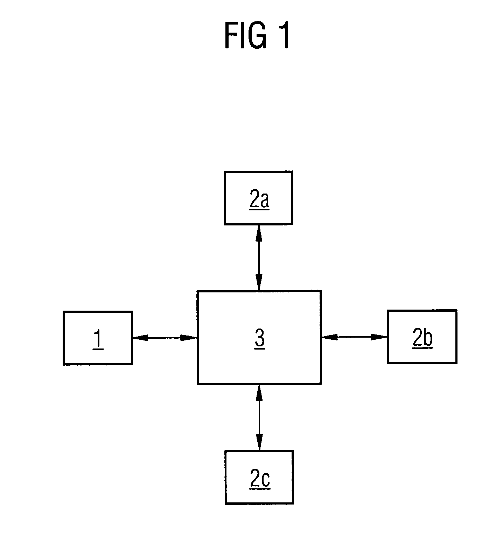

Die PoC-Clients 1,2a,2b,2c sowie die PoC-Server-Einheit 3 sind in der Regel zur Kommunikation gemäß dem Session Initiation Protocol (SIP) eingerichtet, sowie in den unteren Kommunikationsschichten, d.h. in der Transportschicht, zur Kommunikation gemäß dem Transport Control Protocol (TCP) und/oder User Datagramm Protocol (UDP), sowie in der Vermittlungsschicht zur Kommunikation gemäß dem Internet Protocol (IP). Die PoC-Kommunikationsanordnung gemäß Fig. 1 ist somit zur Kommunikation basierend auf dem IP Multimedia Subsystem (IMS) eingerichtet.

Nach erfolgtem Aufbau einer PoC-Session erfolgt die Übertragung von Nutzdaten, insbesondere von Sprachdaten, aber auch von Audio-, Video- oder Textdaten, ausgehend vom ersten PoC-Client 1 gemäß dem Halbduplex-Verfahren zu den in der jeweils angewählten Gruppe angegebenen PoC-Clients 2a,2b,2c über das IP-basierte Kommunikationsnetz sowie über die PoC-Server-Einheit 3.

Wie in der Fig. 1 dargestellt ist, sind die PoC-Clients 1,2a,2b,2c mittels jeweils einer Mobilfunk-Schnittstelle mit der PoC-Server-Einheit 3 verbunden, wobei die Mobilfunk-Schnittstellen in jenen Fällen, in denen die Kommunikationsanordnung auf dem UMTS-Standard beruht, mittels des Radio Access Network (RAN), des Core Network (CN) und des IP Multimedia Subsystems aufgebaut sein können.

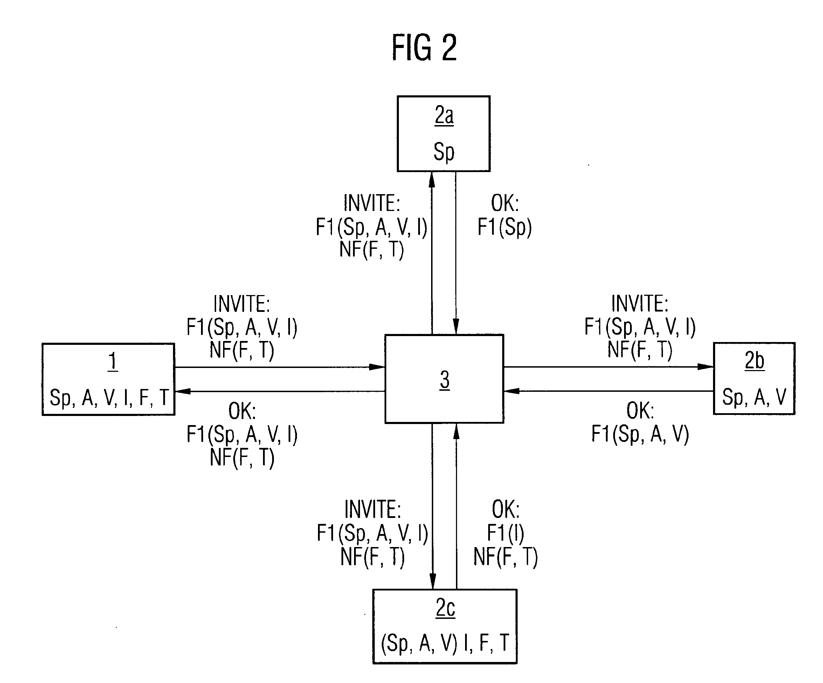

Wie in der Fig. 2 in einem ersten Nachrichtenflussdiagramm dargestellt ist, wird vom PoC-Initiator 1 zunächst eine SIP-INVITE-Nachricht mittels des UMTS-Core Network (UMTS-Kern-Kommunikationsnetz) zu der PoC-Server-Einheit 3 übertragen. Bei den zu übertragenden Datentypen kann es sich etwa um Sprachdaten Sp, Audiodaten A, Videodaten V, Bilddaten I, Textdaten T, oder sonstige, textuelle Daten F (z.B. Dateien) handeln. Wie in der Fig. 2 dargestellt ist, kann beispielsweise PoC-Initiator 1 alle diese Datentypen senden und empfangen, und lädt daher alle anderen PoC-Clients 2a,2b,2c in seiner PoC-Verbindungsanfrage zu einer PoC-Session ein, in der alle diese Datentypen ausgetauscht werden sollen. Dabei wird für die Sprachdaten Sp, Audiodaten A, Videodaten V und Bilddaten I ein Kommunikationskanal F1 definiert. Für die diskreten Datentypen, also etwa die Textdaten T und die sonstigen Daten F, wird ein zweiter Kommunikationskanal NF definiert.

Die in Fig. 2 gezeigte PoC-Verbindungsanfrage ergeht in Form einer SIP-INVITE-Nachricht zunächst an die PoC-Server-Einheit 3, die sie an die ausgewählten PoC-Clients 2a,2b,2c weiterleitet. PoC-Client 2a unterstützt dabei beispielsweise nur Sprachdaten Sp, und ist auch für eine PoC-Session verfügbar. PoC-Client 2a akzeptiert daher den Aufbau eines Kommunikationskanals F1 für Sprachdaten Sp.

PoC-Client 2b unterstützt in diesem Beispiel Sprachdaten Sp, Audiodaten A und Videodaten V, und ist ebenfalls für eine PoC-Session verfügbar. PoC-Client 2b akzeptiert daher den Aufbau eines Kommunikationskanals F1 für Sprachdaten Sp, Audiodaten A und Videodaten V.

PoC-Client 2c unterstützt in diesem Beispiel zwar alle Datentypen, ist aber nur für Bilddaten I, sonstige Daten F und Textdaten T für eine PoC-Session verfügbar. So könnte es etwa sein, dass sich PoC-Client 2c in einer Besprechung befindet, und sein PoC-Gerät lautlos betreiben möchte. PoC-Client 2c akzeptiert daher den Aufbau eines Kommunikationskanals F1 für Bilddaten I, und den Aufbau eines Kommunikationskanals NF für sonstige Daten F und Textdaten T.

Die PoC-Server-Einheit 3 sendet somit die Antwort an den PoC-Initiator 1, dass Bedarf am Aufbau von Kommunikationskanal F1 und NF für alle Datentypen besteht. Es wird in weiterer Folge in bekannter Weise die PoC-Session aufgebaut, wobei aber PoC-Client 2c mit den PoC-Clients 2a und 2b nicht kommunizieren kann. Gemäß dem Stand der Technik wird PoC-Initiator 1 vor dem Beginn der PoC-Session auch nicht erfahren, dass einer der Teilnehmer, nämlich PoC-Client 2c, keine Sprachdaten Sp empfängt. Die PoC-Session wird in herkömmlicher Weise dennoch aufgebaut und verrechnet.

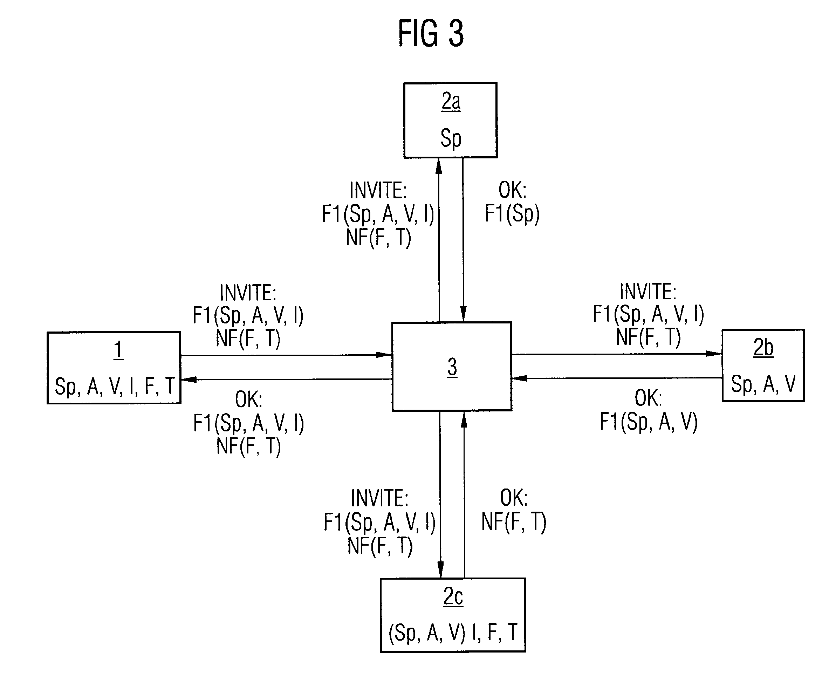

In der Fig. 3 ist im Gegensatz dazu gezeigt, welche Wirkung das erfindungsgemäße Kommunikationsprotokoll auf den Aufbau einer PoC-Session hat. Wie in Fig. 2 gezeigt, ergeht zunächst eine PoC-Verbindungsanfrage in Form einer SIP-INVITE-Nachricht an die PoC-Server-Einheit 3, die sie an die ausgewählten PoC-Clients 2a,2b,2c weiterleitet. Die Erfindung bedingt zunächst keine Änderungen in der Initiierung einer PoC-Session mithilfe des Session Initiation Protocols.

Erfindungsgemäß ist in dieser PoC-Verbindungsanfrage, etwa im Session Description Protocol, in einem gegenüber dem Stand der Technik zusätzlich vorgesehenen Nachrichtenfeld aber eine Prioritätsinformation enthalten, mit der den zu übertragenden, unterschiedlichen Datentypen Sp, A, V, I, T und F eine Übertragungspriorität zugewiesen wird. Sind mehr als ein Kommunikationskanal vorgesehen, etwa zwei Kommunikationskanäle F1 und NF, in denen jeweils eine Gruppe von Datentypen organisatorisch zusammengefasst ist, können Übertragungsprioritäten für die jeweilige Gruppe an Datentypen definiert werden. So ist in der Fig. 3 etwa dargestellt, dass PoC-Initiator 1 den Sprachdaten Sp die höchste Priorität verleiht, den Audiodaten eine niedrigere Priorität, usw. Den Bilddaten I wird im Kommunikationskanal F1 in diesem Beispiel die niedrigste Priorität verliehen. Im Kommunikationskanal NF haben die sonstigen Daten F eine höhere Übertragungspriorität als die Textdaten T.

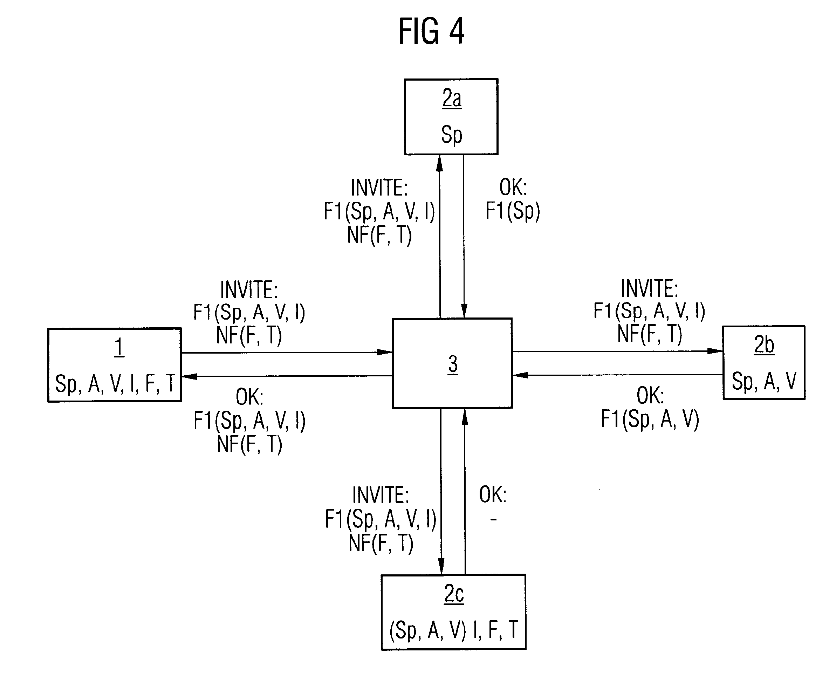

Zur praktischen Ausführung der Erfindung verfügt der PoC-Initiator 1 über eine Einheit (in den Fig. 3 und 4 nicht ersichtlich) zum Erstellen einer PoC-Verbindungsanfrage, die eine Prioritätsinformation enthält, mit der den über den Kommunikationskanal F1,NF zu übertragenden, unterschiedlichen Datentypen Sp,A,V,I,T,F eine Übertragungspriorität zugewiesen wird, und über eine Sendeeinheit (in den Fig. 3 und 4 nicht ersichtlich) zum Senden der PoC-Verbindungsanfrage an einen weiteren PoC-Client 2.

Mit Bezug auf die Fig. 3 unterstützt PoC-Client 2a wiederum nur Sprachdaten Sp, und ist auch für eine PoC-Session verfügbar. PoC-Client 2a akzeptiert daher den Aufbau eines Kommunikationskanals F1 für Sprachdaten Sp. Das wird vom Kommunikationsprotokoll zugelassen, da PoC-Client 2a für den Datentyp mit der höchsten Übertragungspriorität verfügbar ist, nämlich für Sprachdaten Sp.

PoC-Client 2b unterstützt wiederum Sprachdaten Sp, Audiodaten A und Videodaten V, und ist ebenfalls für eine PoC-Session verfügbar. PoC-Client 2b akzeptiert daher den Aufbau eines Kommunikationskanals F1 für Sprachdaten Sp, Audiodaten A und Videodaten V. Vom Kommunikationsprotokoll wird zunächst der Aufbau eines Kommunikationskanals F1 für Sprachdaten zugelassen, da es sich hierbei um den Datentyp mit der höchsten Übertragungspriorität handelt. Aber auch die Übermittlung des Datentyps A mit niedrigerer Übertragungspriorität über diesen Kommunikationskanal F1 wird zugelassen, da PoC-Client 2b auch für alle Datentypen mit höherer Übertragungspriorität, also Sprachdaten Sp, verfügbar ist. Des Weiteren wird auch die Übermittlung des Datentyps V mit niedrigerer Übertragungspriorität über diesen Kommunikationskanal F1 zugelassen, da PoC-Client 2b auch für alle Datentypen mit höherer Übertragungspriorität, also Sprachdaten Sp und Audiodaten A, verfügbar ist.

PoC-Client 2c unterstützt wiederum alle Datentypen, ist aber nur für Bilddaten I, sonstige Daten F und Textdaten T verfügbar. PoC-Client 2c akzeptiert daher den Aufbau eines Kommunikationskanals F1 für Bilddaten I, und den Aufbau eines Kommunikationskanals NF für sonstige Daten F und Textdaten T. Da PoC-Client 2c aber für den Datentyp mit der höchsten Übertragungspriorität, nämlich für Sprachdaten Sp, nicht verfügbar ist, wird der Kommunikationskanal F1 zu PoC-Client 2c nicht aufgebaut, obwohl PoC-Client 2c für Bilddaten I verfügbar wäre. Hierin äußert sich der Unterschied des erfindungsgemäßen Kommunikationsprotokolls gegenüber dem Stand der Technik gemäß Fig. 2.

Da PoC-Client 2c aber für den Datentyp mit der höchsten Übertragungspriorität im Kommunikationskanal NF verfügbar ist, nämlich für sonstige Daten F, wird der Kommunikationskanal NF aufgebaut. Aber auch die Übermittlung des Datentyps T mit niedrigerer Übertragungspriorität wird über diesen Kommunikationskanal F1 zugelassen, da PoC-Client 2c auch für alle Datentypen mit höherer Übertragungspriorität, nämlich sonstige Daten F, verfügbar ist.

In diesem Anwendungsbeispiel würden somit die PoC-Clients 2a und 2b mit dem PoC-Initiator 1 Sprachdaten Sp austauschen, und der PoC-Client 2c Textdaten T und sonstige Daten F.

Das erfindungsgemäße Verfahren löst die erfindungsgemäße Aufgabe somit für jene Fälle vollständig, in denen lediglich ein einziger Kommunikationskanal definiert ist. Falls mehrere Kommunikationskanäle definiert sind, wie in der Fig. 3, kann es noch zu PoC-Sessions kommen, in denen nicht alle Teilnehmer zumindest einen Datentyp teilen können.

Daher kann eine weitere Ausführungsform vorgesehen sein, die in der Fig. 4 dargestellt ist. Hierbei ist in der PoC-Verbindungsanfrage, etwa im Session Description Protocol, in einem gegenüber dem Stand der Technik zusätzlich vorgesehenen Nachrichtenfeld eine weitere Prioritätsinformation enthalten, mit der auch den Kommunikationskanälen F1,NF eine Übertragungspriorität zugewiesen wird, und das Kommunikationsprotokoll den Aufbau des Kommunikationskanals NF mit der niedrigeren Übertragungspriorität nur dann zulässt, wenn ein Aufbau des Kommunikationskanals F1 mit der höheren Übertragungspriorität erfolgt. Diese Regel lässt den Aufbau von Kommunikationskanälen mit den PoC-Clients 2a und 2b zunächst unverändert, wie ein Vergleich der Fig. 4 mit der Fig. 3 zeigt, da ohnehin der Kommunikationskanal F1 mit der höchste Übertragungspriorität aufgebaut wird.

Hinsichtlich PoC-Client 2c zeigt sich aber nun, dass das erfindungsgemäße Kommunikationsprotokoll nun den Aufbau des Kommunikationskanals NF nicht zulässt, da kein Aufbau des Kommunikationskanals F1 mit der höheren Übertragungspriorität erfolgt. Dadurch wird keine PoC-Session mit PoC-Client aufgebaut. An der PoC-Session mit dem PoC-Initiator 1 nehmen stattdessen lediglich die PoC-Clients 2a und 2b teil, wobei alle Teilnehmer Sprachdaten Sp austauschen können, und somit zumindest einen Datentyp teilen können.

Die Erfindung stellt somit auch in diesen Fällen sicher, dass ein PoC-Client 2a,2b,2c nur dann zu einer PoC-Session zugelassen wird, wenn er für zumindest einen gemeinsamen Datentyp mit allen anderen an der PoC-Session teilnehmenden PoC-Clients empfangsbereit ist.

Hinsichtlich Fig. 4 kann bemerkt werden, dass bei einer Umkehrung der Prioritätszuordnung zu den Kommunikationskanälen F1 und NF der Aufbau der PoC-Session nur mit PoC-Client 2c erfolgt. In diesem Fall hat nämlich der Kommunikationskanal NF eine höhere Übertragungspriorität als der Kommunikationskanal F1, sodass das erfindungsgemäße Kommunikationsprotokoll den Aufbau des Kommunikationskanals F1 mit den PoC-Clients 2a und 2b nicht zulässt, da kein Aufbau des Kommunikationskanals NF mit der höheren Übertragungspriorität erfolgt ist.

Eine weitere Ausführungsform des erfindungsgemäßen Verfahrens besteht darin, den Datentypen eine Übertragungspriorität unabhängig von deren Zuteilung zu Kommunikationskanälen zuzuordnen. Mehrere Datentypen können somit dieselbe Übertragungspriorität besitzen, aber jeder Datentyp besitzt lediglich eine Prioritätszuordnung. Der PoC-Initiator 1 könnte etwa Sprachdaten Sp, Audiodaten A und Videodaten V jeweils die höchste Übertragungspriorität verleihen, Bilddaten I die zweithöchste Priorität, und allen anderen Datentypen die niedrigste Priorität. Die PoC-Clients 2a, 2b und 2c können an der PoC-Session somit nur dann teilnehmen, wenn sie für Sprachdaten Sp, Audiodaten A und Videodaten V verfügbar sind. In Bezug auf das Beispiel von Fig. 4 würde das bedeuten, dass nur PoC-Client 2b an einer PoC-Session mit dem PoC-Initiator 1 teilnehmen könnte.

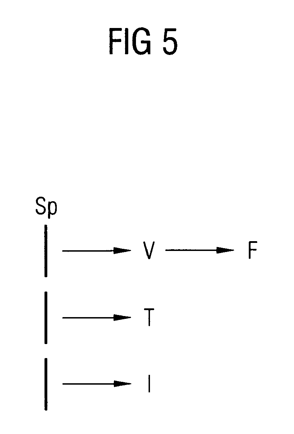

Eine weitere Möglichkeit besteht darin, abhängige Übertragungsprioritäten innerhalb derselben Stufe einer Übertragungspriorität zu definieren. In diesem Fall besitzen wiederum mehrere Datentypen dieselbe Übertragungspriorität, wobei von zumindest einer diese Datentypen weitere Datentypen abhängen, also nur dann akzeptiert werden, wenn der vorgeordnete Datentyp akzeptiert wird. Ein Beispiel ist in der Fig. 5 dargestellt: Der PoC-Initiator 1 könnte etwa Sprachdaten Sp die höchste Priorität verleihen, und Videodaten V, Textdaten T und Bilddaten I jeweils die zweithöchste Priorität. Zusätzlich wird für die textuellen Daten F, etwa Untertitel zu den Videodaten, eine von den Videodaten V abhängige Übertragungspriorität definiert. In diesem Beispiel wird ein PoC-Client 2a,2b,2c nur dann zu einer PoC-Session zugelassen, wenn er für Sprachdaten Sp empfangsbereit ist. Videodaten V, Textdaten T und Bilddaten I verfügen jeweils über eine Abhängigkeit von den Sprachdaten Sp, d.h., dass sie nur dann zugelassen werden, wenn auch Sprachdaten Sp zugelassen sind. Die textuellen Daten F verfügen über eine Abhängigkeit von den Bilddaten V, d.h., dass sie nur dann zugelassen werden, wenn auch Videodaten V zugelassen sind. Es zeigt sich somit ein geordnetes Regelwerk für die Übertragung von Datentypen mit einer vertikalen und einer horizontalen Hierarchie bezüglich ihrer gegenseitigen Abhängigkeit, bei der aber in einer zu Fig. 5 analogen, graphischen Darstellung keine Schleifen in den gegenseitigen Abhängigkeiten auftreten dürfen. In programmtechnischer Hinsicht bedeutet das, dass im Session Description Protocol (SDP), in der jede Datentyp-Zeile mit einer eindeutigen Kennzeichnung ("label", siehe RFC4574) versehen sei muss, jeder PoC-Client 2a,2b,2c für jeden Datentyp festlegen kann, welche anderen Datentypen im Falle seiner Zulassung ebenfalls zugelassen werden müssen. Ein Datentyp kann in diesem Fall nur dann zugelassen werden, wenn auch alle anderen Datentypen, von denen er abhängig ist, ebenfalls zugelassen sind.

Die Erfindung stellt daher eine besonders einfache, aber auch vielseitige Möglichkeit dar, einen PoC-Client 2a,2b,2c nur dann zu einer PoC-Session zuzulassen, wenn er für gewünschte Datentypen des PoC-Initiators 1 empfangsbereit ist.

## Patentansprüche

1. Verfahren zum Aufbau einer Push-to-talk-(Ptt)-Kommunikationsverbindung zwischen einem ersten Ptt-Gerät (1) und einem zweiten Ptt-Gerät (2), bei der Daten unterschiedlichen Datentyps, wie etwa Sprachdaten (Sp), Audiodaten (A), Videodaten (V), Bilddaten (I), Textdaten (T), oder andere, textuelle Daten (F) zwischen dem ersten Ptt-Gerät (1) und dem zweiten Ptt-Gerät (2) übertragen werden, wobei das erste Ptt-Gerät (1) eine Ptt-Verbindungsanfrage für die gegenseitige Übertragung unterschiedlicher Datentypen (Sp,A,V,I,T,F) an das zweite Ptt-Gerät (2) übermittelt, und in weiterer Folge eine Kommunikationsverbindung für zumindest eine Auswahl dieser unterschiedlichen Datentypen (Sp,A,V,I,T,F) über einen Kommunikationskanal (F1,NF) gemäß eines Kommunikationsprotokolls aufgebaut wird, **dadurch gekennzeichnet, dass** in der Ptt-Verbindungsanfrage eine Prioritätsinformation enthalten ist, mit der den über den Kommunikationskanal (F1,NF) zu übertragenden, unterschiedlichen Datentypen (Sp,A,V,I,T,F) eine Übertragungspriorität zugewiesen wird, und das Kommunikationsprotokoll den Aufbau eines Kommunikationskanals (F1,NF) mit dem zweiten Ptt-Gerät (2) nur dann zulässt, wenn das zweite Ptt-Gerät (2) für den Datentyp oder die Datentypen (Sp,A,V,I,T,F) mit der höchsten Übertragungspriorität verfügbar ist, und die Übermittlung eines Datentyps (Sp,A,V,I,T,F) mit niedrigerer Übertragungspriorität über diesen Kommunikationskanal (F1,NF) nur dann zulässt, wenn das zweite Ptt-Gerät (2) für diesen Datentyp (Sp,A,V,I,T,F) verfügbar ist, und das zweite Ptt-Gerät (2) auch für alle Datentypen (Sp,A,V,I,T,F) mit höherer Übertragungspriorität verfügbar ist.

2. Verfahren nach Anspruch 1, **dadurch gekennzeichnet, dass** für eine erste Untergruppe (Sp,A,V,I) der zu übertragenden, unterschiedlichen Datentypen (Sp,A,V,I,T,F) ein erster Kommunikationskanal (F1) verwendet wird, und für eine zweite Untergruppe (T,F) der zu übertragenden, unterschiedlichen Datentypen (Sp,A,V,I,T,F) ein zweiter Kommunikationskanal (NF) verwendet wird.

3. Verfahren nach Anspruch 2, **dadurch gekennzeichnet, dass** in der Ptt-Verbindungsanfrage eine Prioritätsinformation enthalten ist, mit der den Kommunikationskanälen (F1,NF) eine Übertragungspriorität zugewiesen wird, und das Kommunikationsprotokoll den Aufbau des Kommunikationskanals (F1,NF) mit der niedrigeren Übertragungspriorität nur dann zulässt, wenn ein Aufbau des Kommunikationskanals (F1,NF) mit der höheren Übertragungspriorität erfolgt.

4. Verfahren nach Anspruch 2, **dadurch gekennzeichnet, dass** in der Ptt-Verbindungsanfrage eine Prioritätsinformation enthalten ist, die den Datentypen (Sp,A,V,I,T,F) eine Übertragungspriorität unabhängig von deren Zuteilung zu Kommunikationskanälen (F1,NF) zuordnet, wobei mehrere Datentypen (Sp,A,V,I,T,F) dieselbe Übertragungspriorität besitzen können, aber jeder Datentyp (Sp,A,V,I,T,F) lediglich eine Prioritätszuordnung besitzt.

5. Verfahren nach Anspruch 1, **dadurch gekennzeichnet, dass** mehreren Datentypen (Sp,A,V,I,T,F) dieselbe Übertragungspriorität zugeordnet ist, und zumindest von einem dieser Datentypen (Sp,A,V,I,T,F) zumindest ein weiterer Datentyp (Sp,A,V,I,T,F) in seiner Übertragungspriorität abhängt, wobei das Kommunikationsprotokoll den Aufbau eines Kommunikationskanals (F1,NF) mit dem zweiten Ptt-Gerät (2) für den zumindest einen weiteren, abhängigen Datentyp (Sp,A,V,I,T,F) nur dann zulässt, wenn das zweite Ptt-Gerät (2) für den Datentyp oder die Datentypen (Sp,A,V,I,T,F), von denen er abhängig ist, verfügbar ist.

6. Verfahren nach einem der Ansprüche 1 bis 5, **dadurch gekennzeichnet, dass** es sich bei der Ptt-Kommunikationsverbindung um eine Mobilfunk-Kommunikationsverbindung handelt.

7. Verfahren nach einem der Ansprüche 1 bis 6, **dadurch gekennzeichnet, dass** die Ptt-Verbindungsanfrage mithilfe einer SIP-INVITE-Nachricht erfolgt.

8. Verfahren nach Anspruch 7, **dadurch gekennzeichnet, dass** die Zuweisung der Übertragungspriorität im Session Description Protocol erfolgt.

9. Push-to-talk-(Ptt)-Gerät (1) zum Aufbau einer Push-to-talk-(Ptt)-Kommunikationsverbindung zu einem weiteren Ptt-Gerät (2), bei der Daten unterschiedlichen Datentyps (Sp,A,V,I,T,F), wie etwa Sprachdaten (Sp), Audiodaten (A), Videodaten (V), Bilddaten (I), Textdaten (T), oder andere, textuelle Daten (F), zwischen dem ersten Ptt-Gerät (1) und dem zweiten Ptt-Gerät (2) über einen Kommunikationskanal (F1,NF) gemäß eines Kommunikationsprotokolls übertragen werden, **dadurch gekennzeichnet, dass** eine Einheit zum Erstellen einer Ptt-Verbindungsanfrage vorgesehen ist, die eine Prioritätsinformation enthält, mit der den über den Kommunikationskanal (F1,NF) zu übertragenden, unterschiedlichen Datentypen (Sp,A,V,I,T,F) eine Übertragungspriorität zugewiesen wird, und mit einer Sendeeinheit zum Senden der Ptt-Verbindungsanfrage an ein weiteres Ptt-Gerät (2) ausgestattet ist.

10. Kommunikationsanordnung zum Aufbau einer Push-to-talk-(Ptt)-Kommunikationsverbindung mit einem ersten Ptt-Gerät (1) und einem zweiten Ptt-Gerät (2), zwischen denen Daten unterschiedlichen Datentyps (Sp,A,V,I,T,F), wie etwa Sprachdaten (Sp), Audiodaten (A), Videodaten (V), Bilddaten (I), Textdaten (T), oder andere, textuelle Daten (F), über einen Kommunikationskanal (F1,NF) gemäß eines Kommunikationsprotokolls übertragen werden, sowie einem Ptt-Server (3), **dadurch gekennzeichnet, dass** die Ptt-Geräte (1,2) jeweils eine Einheit zum Erstellen einer Ptt-Verbindungsanfrage, sowie eine Sendeeinheit zum Senden der Ptt-Verbindungsanfrage an ein weiteres Ptt-Gerät (1,2) umfassen, wobei die Ptt-Verbindungsanfrage des ersten Ptt-Geräts (1) eine Prioritätsinformation enthält, mit der den über den Kommunikationskanal (F1,NF) zu übertragenden, unterschiedlichen Datentypen (Sp,A,V,I,T,F) eine Übertragungspriorität zugewiesen wird, und der Ptt-Server (3) mit einem Kommunikationsprotokoll ausgestattet ist, das den Aufbau eines Kommunikationskanals (F1,NF) zwischen dem ersten Ptt-Gerät (1) und dem zweiten Ptt-Gerät (2) nur dann zulässt, wenn das zweite Ptt-Gerät (2) für den Datentyp oder die Datentypen (Sp,A,V,I,T,F) mit der höchsten Übertragungspriorität verfügbar ist, und die Übermittlung eines Datentyps (Sp,A,V,I,T,F) mit niedrigerer Übertragungspriorität über diesen Kommunikationskanal (F1,NF) nur dann zulässt, wenn das zweite Ptt-Gerät (2) für diesen Datentyp (Sp,A,V,I,T,F) verfügbar ist, und das zweite Ptt-Gerät (2) auch für alle Datentypen (Sp,A,V,I,T,F) mit höherer Übertragungspriorität verfügbar ist.
